# EUROPEAN PATENT SPECIFICATION

(11) **EP 0 656 386 B1**
(45) Date of publication and mention of the grant of the patent: **13.01.1999**
(21) Application number: 94118595.1
(22) Date of filing: 25.11.1994
(51) Int. Cl.: C08G 77/38, C09D 183/07

(54) **Novel organopolysiloxane and method for the preparation of the same**
Neue Organopolysiloxane und Verfahren zu deren Herstellung
Nouveau organopolysiloxane et méthode pour sa préparation

(30) Priority: 26.11.1993 JP 321135/93
(43) Date of publication of application: 07.06.1995
(73) Proprietor: Dow Corning Toray Silicone Company, Limited, Tokyo 103 (JP)
(72) Inventor: Saruyama, Toshio, Dow Corning Toray, Ichihara-shi, Chiba Prefecture (JP); Yoshitake, Makoto, Dow Corning Toray, Ichihara-shi, Chiba Prefecture (JP)
(74) Representative: Spott, Gottfried, Dr.

(56) References cited:
- EP-A- 0 269 114
- EP-A- 0 281 681
- EP-A- 0 334 067
- DE-C- 3 820 294
- GB-A- 2 067 210
- US-A- 4 568 566

## Description

The present invention relates generally to organopolysiloxanes. More specifically, the invention relates to a certain type of organopolysiloxanes that cure rapidly upon exposure to high-energy radiation, e.g., ultraviolet radiation, electron beam, and so forth, in the presence of a photopolymerization initiator to yield a highly heat-resistant product. The invention further relates to a method for the preparation of such certain organopolysiloxanes.

Organopolysiloxanes that contain trifunctional siloxane units exhibit excellent heat resistance and a capacity for film formation. For these reasons such organopolysiloxanes are used, inter alia, as electrical insulating materials, heat-resistant coatings, protective coatings, starting material for the preparation of copolymers with organic resin monomers, and agents for improving the physical properties of curable organic resins. phenyl-containing branched organopolysiloxanes are particularly heat-resistant and as a result are used as insulating materials and paints for service in high-temperature environments where ordinary organic resins cannot be employed.

It is also known that (meth)acryloyl-functional organopolysiloxanes can be cured by exposure to high-energy radiation, such as ultraviolet light or an electron beam. Methods for the preparation of such organopolysiloxanes are also already known.

For example, Japanese Patent Application Laid Open [Kokai or Unexamined] Number Sho 56-86922 [86,922/1981] teaches the preparation of a (meth)acryloyl-functional organopolysiloxane by the reaction of an epoxy-functional organopolysiloxane with acrylic or methacrylic acid.

Japanese Patent Application Laid Open Number Sho 63-135426 [135,426/1988] also discloses a method for the preparation of an organopolysiloxane that is curable by high-energy radiation. This method consists of the successive reaction of an epoxy-functional organopolysiloxane first with acrylic or methacrylic acid and then with acryloyl or methacryloyl chloride.

Japanese Patent Application Laid Open Number Sho 63-196629 [196,629/1988] teaches the reaction of an epoxy-functional organopolysiloxane with a mixture of methacrylic acid and methacrylic anhydride.

However, the (meth)acryloyl-functional organopolysiloxanes afforded by the prior art exhibit poor curability and yield poorly heat-resistant cured products and are therefore excluded from use in some applications. The drawbacks of the prior art are overcome by the present invention. The novel radiation-curable organopolysiloxanes of the invention utilize trifunctional siloxane units and yield a cured coating that is highly heat-resistant.

In accordance with the present invention there is provided a novel organopolysiloxane having an average unit formula

(R¹SiO_{3/2}) ₐ (R²R³SiO_{2/2}) _{b} (SiO_{4/2}) _{c} (I)

wherein R¹, R², and R³ denote organic groups selected from the group consisting of monovalent hydrocarbon groups, organic groups with the following general formula that contain acryloyl groups or methacryloyl groups 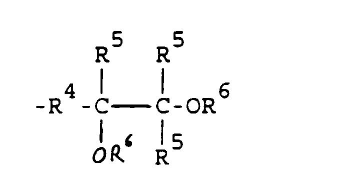 wherein R⁴ denotes divalent organic groups, each R⁵ independently denotes hydrogen or a monovalent organic group, and each R⁶ denotes an acryloyl group or methacryloyl group or hydrogen atom and at least 1 of R⁶ is an acryloyl group or methacryloyl group, organic groups with the following general formula that contain the acryloyl group or methacryloyl group 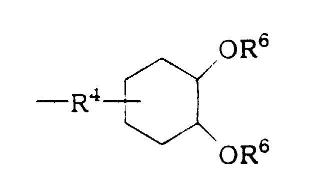 wherein R⁴ and R⁶ are defined as above, and epoxy-functional organic groups,
wherein 5 to 30 mole% of said organic groups of formula (I) are organic groups that contain acryloyl or methacryloyl groups, 5 to 90 mole% of said organic groups of formula (I) are phenyl groups; and a is a positive number, b is zero or a positive number, c is zero or a positive number, b/a is zero to 2, and c/ (a + b + c) is zero to 0.3.

To explain the preceding in greater detail, the monovalent hydrocarbon groups subsumed under the definition for R¹, R², and R³ in the preceding formula for the novel organopolysiloxane of the invention are exemplified by alkyl groups such as methyl, ethyl, propyl; alkenyl groups such as vinyl, allyl, and aryl groups such as phenyl. In regard to the other elements in the definition of R¹, R², and R³, the group R⁴ is a divalent organic group such as methylene, ethylene, propylene, 2-oxapropylene, 4-oxapropylene, the group with the structure 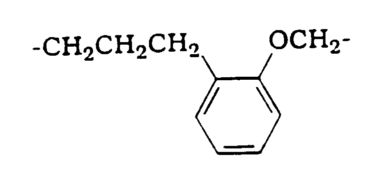 R⁵ is the hydrogen atom or a monovalent organic group such as methyl, ethyl, propyl, vinyl, phenyl, and naphthyl; and R⁶ is the acryloyl group, methacryloyl group, or the hydrogen atom. Subject acryloyl-functional and methacryloyl-functional organic groups are specifically exemplified by the following.

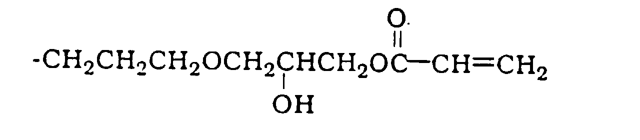

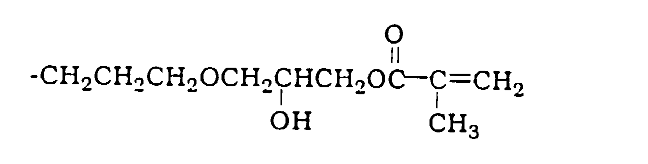

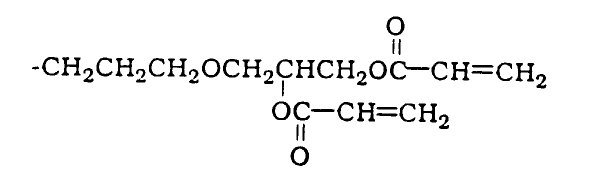

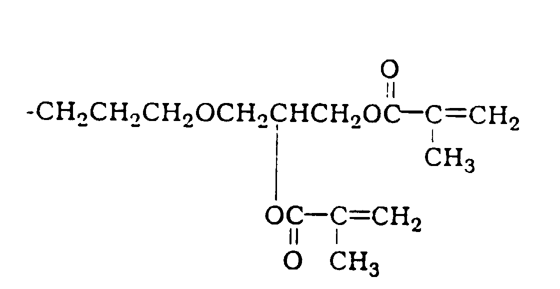

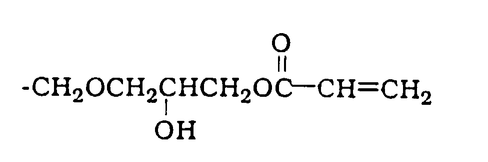

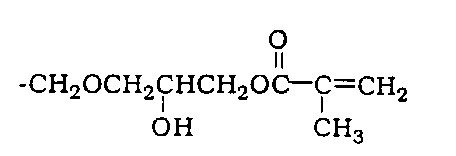

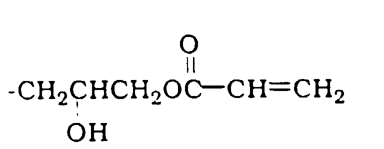

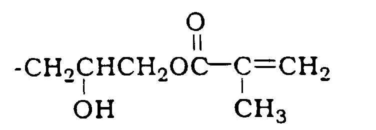

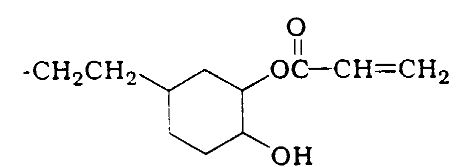

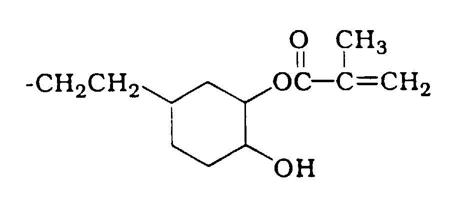

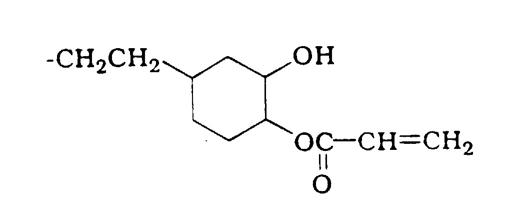

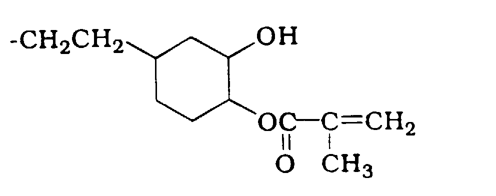

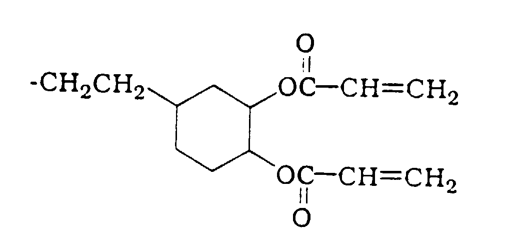

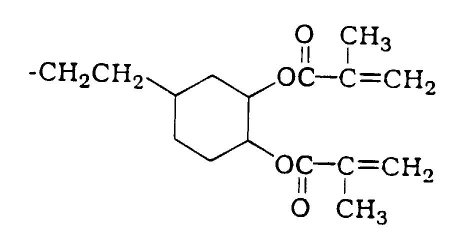

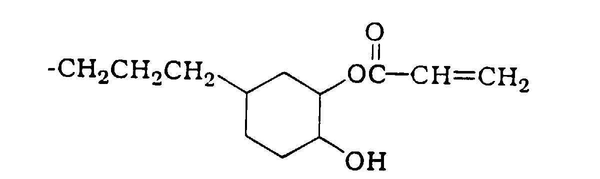

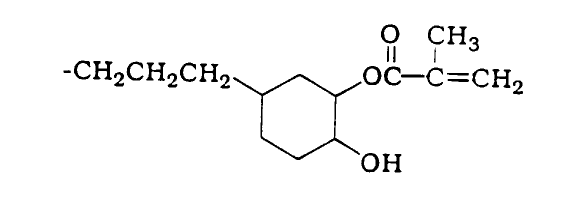

The epoxy-functional organic group is specifically exemplified by 2,3-epoxypropyl, 3,4-epoxybutyl, 3-glycidoxypropyl, 4-glycidoxybutyl, 2-(3,4-epoxycyclohexyl)ethyl, 3-(3,4-epoxycyclohexyl)propyl, 3-(2-glycidoxyphenyl)propyl.

The organic groups containing acryloyl or methacryloyl must make up 5 to 30 mole% of the total organic groups in the organopolysiloxane of the invention as set forth in general formula (I). When the acrylol- or methylacrylol-containing organic groups are less than 5 mole%, the organopolysiloxane of formula (I) does not cure adequately when exposed to high-energy radiation, e.g., ultraviolet radiation, electron beam, etc. At the other extreme, the heat resistance of the organopolysiloxane of formula (I) declines at values in excess of 30 mole%. In addition, phenyl groups must comprise 5 to 90 mole% of the total organic groups in formula (I). The cure rate is slow and the cured product has a reduced heat resistance when the phenyl content is less than 5 mole%, while the post-cure film properties decline when the phenyl content exceeds 90 mole%.

The subscript a in the preceding formula (I) specifies the trifunctional siloxane unit content and is a positive number. The subscript b, which represents the difunctional siloxane unit content, has a value of zero or is a positive number, and the subscript c, which represents the tetrafunctional siloxane unit content, also has a value of zero or is a positive number. Furthermore, b/a should be a number from zero to 2, and c/(a + b + c) is to be a number from zero to 0.3. Values outside these ranges cause a reduced curability under exposure to high-energy radiation, e.g., ultraviolet radiation, electron beam.

The method according to the invention for the preparation of subject organopolysiloxane characteristically comprises the reaction of
(A) epoxy-functional organopolysiloxane with the general formula

   (R⁷SiO_{3/2})_{d}(R⁸R⁹SiO_{2/2})ₑ(SiO_{4/2})_{f}

   wherein R⁷, R⁸, and R⁹ denote organic groups selected from the group consisting of monovalent hydrocarbon groups and epoxy-functional organic groups, and said epoxy-functional organic groups are 5 to 30 mole% of said organic groups, 5 to 90 mole% of said organic groups are phenyl groups, d is a positive number, e is zero or a positive number, f is zero or a positive number, e/ d is zero to 2, and f/(d + e + f) is zero to 0.3
with
(B) a sufficient quantity of acrylic acid or methacrylic acid, to provide 0.3 to 1.0 mole of this component for each mole of epoxy groups in component (A)
and, optionally
(C) a sufficient quantity of an anhydride or acid halide of acrylic acid or methacrylic acid, to provide up to 1.0 mole of this component for each mole of epoxy groups in component (A).

R⁷, R⁸, and R⁹ in the preceding formula for the component (A) used in the method of the invention denote organic groups selected from the group consisting of monovalent hydrocarbon groups and epoxy-functional organic groups. Said monovalent hydrocarbon groups are exemplified by the monovalent hydrocarbon groups provided above as exemplary of R¹, R², and R³, and said epoxy-functional organic groups are exemplified by the epoxy-functional organic groups provided above for the organopolysiloxane of formula (I). The epoxy-functional organic groups must make up 5 to 30 mole% of the total organic groups, and 5 to 90 mole% of the total organic groups must be phenyl.

The subscript d in the preceding formula specifies the trifunctional siloxane unit content and is a positive number. The subscript e, which represents the difunctional siloxane unit content, has a value of zero or is a positive number, and the subscript f, which represents the tetrafunctional siloxane unit content, also has a value of zero or is a positive number. Furthermore, e/d should be a number from zero to 2, and f/(d + e + f) is to be a number from zero to 0.3.

The preparative method of the present invention comprises the reaction of the epoxy-functional organopolysiloxane (A) with acrylic acid or methacrylic acid comprising the aforesaid component (B), with a sufficient quantity of component (B) being added to the reaction so that 0.3 to 1.0 mole per each mole epoxy groups in component (A) is provided. The use of component (B) at less than 0.3 mole per each mole epoxy groups in component (A) results in too few acryloyl or methacryloyl groups in the organopolysiloxane of formula (I), which in turn causes a poor curability. On the other hand, the reaction of more than 1.0 mole component (B) is essentially impossible, because the stoichiometry of this reaction permits the reaction of at most 1 mole carboxyl group per each mole epoxy group.

The use of component (C), which is an anhydride or acid halide of acrylic or methacrylic acid, is optional. Component (C) is added in an amount up to 1.0 mole for each mole of epoxy groups in component (A) and is preferably added in an amount up to 0.5 mole for each of mole epoxy groups in component (A). The reaction of this component results in esterification of the alcoholic hydroxyl group generated by the reaction of the epoxy group in component (A) and the acrylic acid or methacrylic acid (B), and thereby functions to introduce a second acryloyl or methacryloyl group into an organic group already containing 1 acryloyl or methacryloyl group.

The reaction proceeds sequentially when component (C) is present in that components (A) and (B) react first and the resulting reaction product then reacts with component (C).

The reaction under consideration is run generally at 25°C to 130°C and is preferably run at 60°C to 100°C. This reaction can be accelerated through the use of a catalyst, although it will run even in the absence of a catalyst. Suitable catalysts are, for example, acids such as para-toluenesulfonic acid, methanesulfonic acid, trifluoroacetic acid, and amines such as triethylamine, benzyldimethylamine, 1,4-diazabicyclo[2.2.2]octane, tetramethylguanidine.

The reaction of components (A) and (B) or (A), (B), and (C) may be run in the absence of organic solvent as long as the components can be mixed to homogeneity. However, it is generally preferred that the reaction be carried out in a solvent. Organic solvents suitable for this purpose are exemplified by aromatic hydrocarbon solvents such as toluene, xylene, and aliphatic hydrocarbon solvents such as hexane, heptane, octane.

The organopolysiloxanes of the present invention cure rapidly when exposed, in the presence of photopolymerization initiator, to high-energy radiation, e.g., ultraviolet radiation, electron beam, etc., to yield a highly heat-resistant product. These characteristics make the organopolysiloxane of the invention useful as a component in or physical-property improver for electrical insulating materials, heat-resistant paints, protective coatings.

### Examples

The invention is explained in greater detail below with reference to working examples. The Mn and Mw reported in the examples are the number-average molecular weight and weight-average molecule weight, respectively, of the organopolysiloxane as determined by gel permeation chromatography using polystyrene calibration. The following abbreviations are used: Me for methyl, Ph for phenyl, and Ep for 3-glycidoxypropyl.

### Example 1

199.2 g epoxy-functional organopolysiloxane (Mn = 2,510, Mw = 5,490) with the average component formula

(PhSiO_{3/2}) _{0.7} (Me₂SiO_{2/2})_{0.1} (EpMeSiO_{2/2}) _{0.2}

and 199.2 g toluene were placed in a reactor and mixed at room temperature to yield a homogeneous solution. 1.1 g tetramethylguanidine and 21.6 g acrylic acid were added with mixing to homogeneity. The resulting mixture was heated for 16 hours at 90°C while stirring and then cooled. Removal of the toluene and unreacted acrylic acid by heating the reaction solution under reduced pressure gave 218.4 g of a viscous transparent yellow liquid. Mn for this product was 2,330, and Mw was 5,020. Using ²⁹Si and ¹³C nuclear magnetic resonance spectroscopic analyses, this product was confirmed to be organopolysiloxane with the average component formula

(PhSiO_{3/2}) _{0.7} (Me₂SiO_{2/2}) _{0.1} (EpMeSiO_{2/2}) _{0.02} (XMeSiO_{2/2})_{0.18}

in which

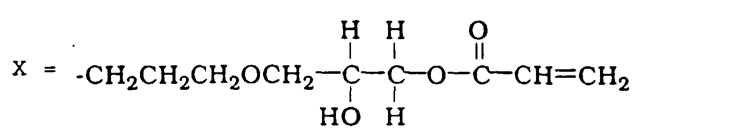

10 g of this organopolysiloxane was mixed to homogeneity with 0.4 g 2-hydroxy-2-methylpropiophenone (photopolymerization initiator, brand name: Darocur 1173, from Merck) and 10 g toluene. A test specimen was prepared by coating the obtained solution on an aluminum panel using a spin coater to give a dry film thickness of 4 to 6 micrometers. The toluene was evaporated off in a forced convection oven at 50°C, and the test specimen was then placed in a conveyor-type ultraviolet exposure device (UVC-2533 from the Ushio Denki Company). Ultraviolet exposure was conducted under the following conditions: lamp intensity = 70 mW/cm, lamp height = 100 mm, conveyor velocity = 4 m/minute. The film surface was thereafter rubbed with a toluene-impregnated cloth in order to determine if the film would delaminate or dissolve. When delamination or dissolution of the film was observed, the test specimen was re-submitted to UV exposure in the conveyor-type ultraviolet exposure device. This procedure was used to determine the number of passes required until no film delamination or dissolution was observed. Another test specimen was submitted to thermogravimetric analysis in order to determine the weight loss of the cured film when heated. Heating was carried out in a nitrogen stream at a rate of rise of 15°C/minute. The temperature was measured at which the weight loss of the cured film reached 10 weight%, and this is reported as the 10% weight-loss temperature. The measurement results are reported in Table 1 below.

### Example 2

180.4 g epoxy-functional organopolysiloxane (Mn = 2,780, Mw = 6,830) with the average component formula

(PhSiO_{3/2})_{0.5}(Me₂SiO_{2/2})_{0.3}(EpSiO_{3/2})_{0.2}

and 180.4 g toluene were placed in a reactor and mixed at room temperature to yield a homogeneous solution. 0.6 g 1,4-diazabicyclo[2.2.2]octane and 25.8 g methacrylic acid were added with mixing to homogeneity. The resulting mixture was heated for 24 hours at 90°C while stirring and then cooled. Removal of the toluene and unreacted methacrylic acid by heating the reaction solution under reduced pressure gave 201.7 g of a viscous transparent yellow liquid. Mn for this product was 2,700, and Mw was 6,510. Using ²⁹Si and ¹³C nuclear magnetic resonance spectroscopic analyses, this product was confirmed to be organopolysiloxane with the average component formula

(PhSiO_{3/2})_{0.5}(Me₂SiO_{2/2})_{0.3}(EpSiO_{3/2})_{0.04}(YSiO_{3/2})_{0.16}

in which

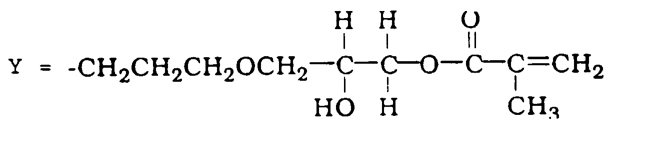

The properties of this organopolysiloxane were measured as in Example 1, and the obtained results are reported in Table 1 below.

### Example 3

132.9 g epoxy-functional organopolysiloxane (Mn = 3,850, Mw = 7,420) with the average component formula

(PhSiO_{3/2})_{0.68}(Me₂SiO_{2/2})_{0.14}(SiO_{4/2})_{0.09}(ZSiO_{3/2})_{0.09}

(Z = 2-(3,4-epoxycyclohexyl)ethyl) and 66.4 g toluene were placed in a reactor and mixed at room temperature to yield a homogeneous solution. 7.73 g methacrylic acid and 17.0 g methacrylic anhydride were added with mixing to homogeneity. The resulting mixture was heated for 24 hours at 100°C while stirring and then cooled. Removal of the toluene and unreacted methacrylic acid and methacrylic anhydride by heating the reaction solution under reduced pressure gave 145.0 g of a viscous transparent yellowish-brown liquid. Mn for this product was 3,710, and Mw was 6,940. Using ²⁹Si and ¹³C nuclear magnetic resonance spectroscopic analyses, this product was confirmed to be organopolysiloxane with the average component formula

(PhSiO_{3/2})_{0.68}(Me₂SiO_{2/2})_{0.14}(SiO_{4/2})_{0.09}(ZSiO_{3/2})_{0.02}(Z'SiO_{3/2})_{0.07}

in which

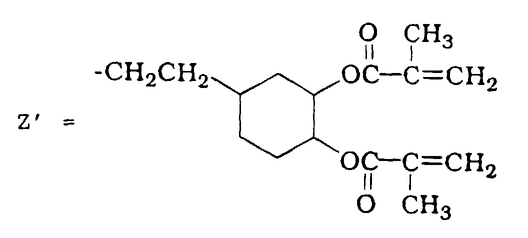

The properties of this organopolysiloxane were measured as in Example 1, and the obtained results are reported in Table 1 below.

### Comparative Example 1

83.8 g epoxy-functional organopolysiloxane with the average component formula

Me₃SiO(MeEpSiO)₃(Me₂SiO)₇SiMe₃

and 99.7 g toluene were placed in a reactor and mixed at room temperature to yield a homogeneous solution. 15.9 g acrylic acid and 0.50 g tetramethylguanidine were added with mixing to homogeneity. The resulting mixture was heated for 24 hours at 90°C while stirring and then cooled. Removal of the toluene and unreacted acrylic acid by heating the reaction solution under reduced pressure gave 95.1 g of a viscous transparent yellowish-brown liquid. Using ²⁹Si and ¹³C nuclear magnetic resonance spectroscopic analyses, this product was confirmed to be organopolysiloxane with the average component formula

Me₃SiO(MeEpSiO)_{0.75}(MeXSiO)_{2.25}(Me₂SiO)₇SiMe₃

in which X is defined as above.

The properties of this organopolysiloxane were measured as in Example 1, and the obtained results are reported in Table 1 below.

**Table 1**

| | number of passes required for curing | 10% weight-loss temperature °C |
|---|---|---|
| Example 1 | 2 | 370 |
| Example 2 | 3 | 360 |
| Example 3 | 2 | 360 |
| Comparative Example 1 | 11 | 280 |

## Claims

1. An organopolysiloxane having an average unit formula
(R¹SiO_{3/2}) ₐ (R²R³SiO_{2/2}) _{b} (SiO_{4/2}) _{c} (I)
wherein R¹, R², and R³ denote organic groups selected from the group consisting of monovalent hydrocarbon groups, organic groups with the following general formula that contain acryloyl groups or methacryloyl groups 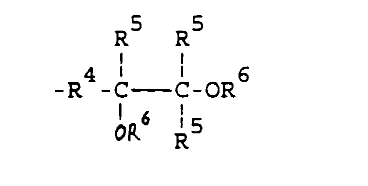 wherein R⁴ denotes divalent organic groups, each R⁵ independently denotes hydrogen or a monovalent organic group, and each R⁶ denotes an acryloyl group or methacryloyl group or hydrogen atom and at least 1 of R⁶ is an acryloyl group or methacryloyl group, organic groups with the following general formula that contain the acryloyl group or methacryloyl group 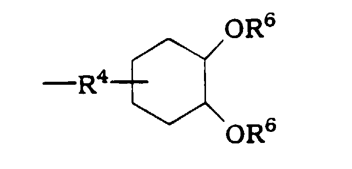 wherein R⁴ and R⁶ are defined as above, and epoxy-functional organic groups, wherein 5 to 30 mole% of said organic groups of formula (I) are groups that contain acryloyl or methacryloyl groups, 5 to 90 mole% of said organic groups of formula (I) are phenyl groups, and a is a positive number, b is zero or a positive number, c is zero or a positive number, b/a is zero to 2, and c/ (a + b + c) is zero to 0.3.

2. A composition in accordance with Claim 1 further comprising an effective amount of a photoinitiator.

3. A method for the preparation of an organopolysiloxane of the general formula (I) of Claim 1, said method comprising reacting
(A) an epoxy-functional organopolysiloxane with the general formula
(R⁷SiO_{3/2}) _{d} (R⁸R⁹SiO_{2/2}) ₑ (SiO_{4/2}) _{f}
wherein R⁷, R⁸, and R⁹ denote organic groups selected from the group consisting of monovalent hydrocarbon groups and epoxy-functional organic groups, and said epoxy-functional organic groups are 5 to 30 mole% of said organic groups, 5 to 90 mole% of said organic groups are phenyl groups, d is a positive number, e is zero or a positive number, f is zero or a positive number, e/d is zero to 2, and f/(d + e + f) is zero to 0.3,
with
(B) a sufficient quantity of acrylic acid or methacrylic acid to provide 0.3 to 1.0 mole of component (B) for each mole of epoxy groups in component (A).

4. A method in accordance with Claim 3 further comprising reacting (C) a sufficient quantity of an anhydride or acid halide of acrylic acid or methacrylic acid to provide up to 1.0 mole of component (C) for each mole of epoxy groups in component (A).

5. An article of manufacture comprising a substrate presenting at least one surface and said surface having a cured coating formed thereon, said cured coating being formed from the composition of Claim 2.

## Patentansprüche

1. Organopolysiloxan der folgenden Formel für die durchschnittliche Einheit:
(R¹SiO_{3/2})ₐ(R²R³SiO_{2/2})_{b}(SiO_{4/2})_{c} (I)
worin R¹, R² und R³ für organische Gruppen stehen, die unter einwertigen Kohlenwasserstoffgruppen, organischen Gruppen der folgenden allgemeinen Formel, die Acryloylgruppen oder Methacryloylgruppen enthalten: 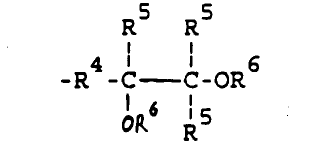 worin R⁴ für zweiwertige organische Gruppen steht, jeder Rest R⁵ unabhängig voneinander Wasserstoff oder eine einwertige organische Gruppe bedeutet und jeder Rest R⁶ eine Acryloylgruppe oder Methacryloylgruppe oder ein Wasserstoffatom darstellt und mindestens ein Rest R⁶ für eine Acryloylgruppe oder Methacryloylgruppe steht,
organischen Gruppen der folgenden allgemeinen Formel, die eine Acryloylgruppe oder Methacryloylgruppe enthalten: 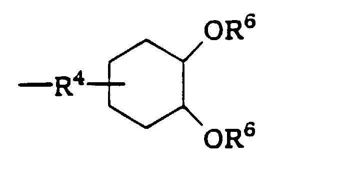 worin R⁴ und R⁶ die oben angegebene Bedeutung besitzen, und epoxyfunktionellen organischen Gruppen ausgewählt sind, wobei 5 bis 30 Mol-% der organischen Gruppen der Formel (I) Gruppen sind, die Acryloyl- oder Methacryloylgruppen enthalten, 5 bis 90 Mol-% der organischen Gruppen der Formel (I) Phenylgruppen sind und a eine positive Zahl bedeutet, b 0 oder eine positive Zahl bedeutet, c 0 oder eine positive Zahl bedeutet, das Verhältnis b/a 0 bis 2 beträgt und das Verhältnis c/(a+b+c)0 bis 0,3 beträgt.

2. Zusammensetzung nach Anspruch 1, die des weiteren eine wirksame Menge eines Photoinitiators enthält.

3. Verfahren zur Herstellung eines Organopolysiloxans der allgemeinen Formel (I) nach Anspruch 1, wobei das Verfahren ein Umsetzen
(A) eines epoxyfunktionellen Organopolysiloxans der allgemeinen Formel
(R⁷SiO_{3/2})_{d}(R⁸R⁹SiO_{2/2})ₑ(SiO_{4/2})_{f},
wonn R⁷, R⁸ und R⁹ für organische Gruppen stehen, die unter einwertigen Kohlenwasserstoffgruppen und epoxyfunktionellen organischen Gruppen ausgewählt sind, wobei die epoxyfunktionellen organischen Gruppen 5 bis 30 Mol-% der organischen Gruppen ausmachen, 5 bis 90 Mol-% der organischen Gruppen Phenylgruppen sind, d eine positive Zahl bedeutet, e 0 oder eine positive Zahl bedeutet, f 0 oder eine positive Zahl bedeutet, das Verhältnis e/d 0 bis 2 beträgt und das Verhältnis f/(d+e+f) 0 bis 0,3 beträgt, mit
(B) einer ausreichenden Menge an Acrylsäure oder Methacrylsäure, um 0,3 bis 1,0 Mol Komponente (B) für jedes Mol Epoxygruppen in der Komponente (A) bereitzustellen, umfaßt.

4. Verfahren nach Anspruch 3, das des weiteren ein Umsetzen mit (C) einer ausreichenden Menge eines Anhydrids oder Säurehalogenids von Acrylsäure oder Methacrylsäure zur Bereitstellung von bis zu 1,0 Mol Komponente (C) pro Mol Epoxygruppen in der Komponente (A) umfaßt.

5. Herstellungsgegenstand, der ein mindestens eine Oberfläche aufweisendes Substrat umfaßt, wobei die Oberfläche einen darauf ausgebildeten gehärteten Überzug aufweist, der aus der Zusammensetzung nach Anspruch 2 gebildet ist.

## Revendications

1. Organopolysiloxane ayant la formule unitaire moyenne
(R¹SiO_{3/2})ₐ(R²R³SiO_{2/2})_{b}(SiO_{4/2})_{c} (I)
dans laquelle R¹, R² et R³ représentent des groupes organiques choisis dans le groupe constitué par les groupes hydrocarbonés monovalents, les groupes organiques ayant la formule générale suivante qui contiennent des groupes acryloyle ou des groupes méthacryloyle 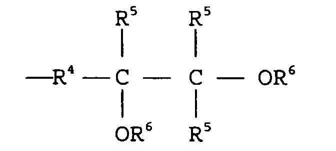 dans laquelle R⁴ représente des groupes organiques divalents, chaque R⁵ représente indépendamment un hydrogène ou un groupe organique monovalent, et chaque R⁶ représente un groupe acryloyle ou un groupe méthacryloyle ou un atome d'hydrogène, et au moins 1 des R⁶ est un groupe acryloyle ou un groupe méthacryloyle, les groupes organiques ayant la formule générale suivante qui contiennent le groupe acryloyle ou le groupe méthacryloyle 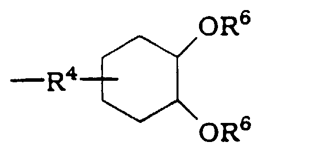 dans laquelle R⁴ et R⁶ sont définis comme ci-dessus, et les groupes organiques à fonction époxy,
dans lequel 5 à 30 % en moles desdits groupes organiques de formule (I) sont des groupes qui contiennent des groupes acryloyle ou méthacryloyle, 5 à 90 % en moles desdits groupes organiques de formule (I) sont des groupes phényle, et a est un nombre positif, b est zéro ou un nombre positif, c est zéro ou un nombre positif, b/a est zéro à 2, et c/(a+b+c) est zéro à 0,3.

2. Composition selon la revendication 1, comprenant en outre une quantité efficace d'un photoinitiateur.

3. Procédé pour la préparation d'un organopolysiloxane de la formule générale (I) de la revendication 1, ledit procédé comprenant la réaction
(A) d'un organopolysiloxane à fonction époxy ayant la formule générale
(R⁷SiO_{3/2}) _{d} (R⁸R⁹SiO_{2/2})ₑ(SiO_{4/2})_{f}
dans laquelle R⁷, R⁸ et R⁹ représentent des groupes organiques choisis dans le groupe constitué par les groupes hydrocarbonés monovalents et les groupes organiques à fonction époxy, et lesdits groupes organiques à fonction époxy représentent 5 à 30 % en moles desdits groupes organiques, 5 à 90 % en moles desdits groupes organiques sont des groupes phényle, d est un nombre positif, e est zéro ou un nombre positif, f est zéro ou un nombre positif, e/d est zéro à 2, et f/(d+e+f) est zéro à 0,3, avec
(B) une quantité suffisante d'acide acrylique ou d'acide méthacrylique pour fournir 0,3 à 1,0 mole de constituant (B) pour chaque mole de groupes époxy dans le constituant (A).

4. Procédé selon la revendication 3, comprenant en outre la réaction (C) d'une quantité suffisante d'un anhydride ou d'un halogénure de l'acide acrylique ou de l'acide méthacrylique pour fournir jusqu'à 1,0 mole de constituant (C) pour chaque mole de groupes époxy dans le constituant (A).

5. Article manufacturé comprenant un substrat présentant au moins une surface et ladite surface ayant un revêtement durci formé sur celle-ci, ledit revêtement durci étant formé à partir de la composition de la revendication 2.
